# EUROPEAN PATENT APPLICATION

(11) **EP 4 790 500 A1**
(43) Date of publication of application: **12.08.2026**
(21) Application number: 26157513.8
(22) Date of filing: 10.02.2026
(51) Int. Cl.: G05B 19/418

(54) **CONTROL SYSTEM FOR LINEAR MOTOR CONVEYORS**

(30) Priority: 10.02.2025 US 202563756625 P
(71) Applicant: ATS Corporation, Cambridge, Ontario N3H 4R7 (CA)
(72) Inventor: DOLGOVYKH, Anton, Cambridge, Ontario, N3H 4R7 (CA); KNAP, Graham Richard, Cambridge, Ontario, N3H 4R7 (CA); BEYAK, Lucas, Cambridge, Ontario, N3H 4R7 (CA); VELA, Timothy Jordan, Cambridge, Ontario, N3H 4R7 (CA); NASHED, Marina, Cambridge, Ontario, N3H 4R7 (CA); KLEINIKKINK, Albert John, Cambridge, Ontario, N3H 4R7 (CA)
(74) Representative: Noble, Nicholas

(57) **Abstract**

A control system for a linear motor conveyor includes a programmable logic controller capable of determining shuttle trajectories of shuttles moving on the track of the linear motor and a computing device that provides different motion control methods for controlling movement of the plurality of shuttles. The different methods include an internal trajectory control that determines the shuttle trajectories and then determines the control data necessary to provide the determined trajectories and a 3^{rd} party trajectory control that receives the shuttle trajectories from the PLC and then determines the control data necessary to provide the received trajectories.

## Description

### RELATED APPLICATIONS

The current disclosure claims priority to US Provisional Application No. 63/756,625 filed February 10, 2025, entitled "Control System For Linear Motor Conveyors," the entire contents of which are incorporated herein by reference for all purposes.

### TECHNICAL FIELD

The current disclosure relates to a control system for a linear motor conveyor, and in particular to a hardware agnostic control system.

### BACKGROUND

Linear motor conveyors are used in a broad range of applications including in automated, or semi-automated manufacturing, assembly, and packaging applications. Linear motor conveyors comprise a track on which a plurality of shuttles are controllably moved. The shuttles can carry parts, components and/or tooling around the track in order to carry out one or more operations at one or more processing stations.

The control of the movement of the shuttles is typically provided by a programmable logic controller (PLC) that determines the trajectories of all of the shuttles on the track and controls the track electronics in order to provide the determined shuttle trajectories. The control provided by the PLC takes into account numerous factors when determining shuttle trajectories, including maximum velocities and accelerations of the shuttles along different regions of the track, locations of other shuttles to avoid collisions, safe following distances between shuttles, locations of external components, synchronization with other components or tooling, etc. Movement and operation of the tooling is similarly controlled by respective controllers or PLCs.

While PLCs or other controllers can determine the trajectories of shuttles along a track as well as the trajectories of other tooling associated with the track, the controllers are typically provided by particular manufacturers and support their own eco-system of products. Accordingly, in order for a customer to control the shuttle trajectories on a track as well as the trajectories of the tooling, all of the components may need to be from the same manufacturer or eco-system of inter-operable components, which may be undesirable.

An additional, alternative and/or improved control system for a linear motor conveyor system is desirable.

### BRIEF DESCRIPTION OF THE DRAWINGS

Further features and advantages of the present disclosure will become apparent from the following detailed description, taken in combination with the appended drawings, in which:
FIG. 1 depicts a control system for a linear motor conveyor.
FIG. 2 depicts details of a control system for a linear motor conveyor.
FIG. 3 depicts details of a further control system for a linear motor conveyor.
FIG. 4 depicts details of motion control functionality provided by a control system for a linear motor conveyor.
FIG. 5A depicts a graph of a desired positioning of a shuttle and an actual position of the shuttle.
FIG. 5B depicts a shuttle's desired acceleration trajectory, a compensation trajectory and the combined trajectory.
FIG. 6A depicts a graph of a desired position and actual position of a shuttle as it moves across a gap between two sections.
FIG. 6B depicts a compensation trajectory for the gap error of FIG. 6A.
FIG. 7 depicts a method for calculating a shuttle's trajectory.
FIG. 8 depicts a method of compensating a shuttle's trajectory for one or more errors.
FIG. 9 depicts an additional or alternative method for processing each of the error compensations.
FIG. 10 depicts a multi-region track controlled by different motion control methods;
FIG. 11 depicts further details of motion control functionality provided by a control system for a linear motor conveyor; and
FIG. 12 depicts a method of providing multi-region motion control.

### DETAILED DESCRIPTION

In accordance with the present disclosure there is provided a control system for a linear motor conveyor comprising a track over which a plurality of shuttles are controllably moved, the control system comprising: a track control computing device comprising: a communication interface in communication with the track; and a processor executing instructions that configure the track control computing device to provide a plurality of different motion control methods for controlling movement of the plurality of shuttles, the motion control methods comprising: internal trajectory control configured to: determine shuttle trajectories; determine control data based on the determined shuttle trajectories; and transmit the control data to the track over the communication interface; and 3^{rd} party trajectory control configured to: receive shuttle trajectories; determine control data based on the received shuttle trajectories; and transmit the control data to the track over the communication interface.

In a further embodiment of the control system, the motion control methods further comprise: external master sync control configured to: receive an external master sync signal; determine sync shuttle trajectories based on the external sync signal; determine control data based on the sync shuttle trajectories; and transmit the control data to the track over the communication interface.

In a further embodiment of the control system, determining the sync shuttle trajectories uses a sync table associating shuttle positions with sync signals.

In a further embodiment of the control system, the track control computing device can control different sections of the track using different motion control methods.

In a further embodiment of the control system, the instructions executed by the processor further configure the track control computing device to provide transition control functionality for transitioning motion control from a first motion control method to a second motion control method.

In a further embodiment of the control system, the transition control functionality controls a shuttle trajectory to match shuttle kinematics determined by the second motion control method at a transition location.

In a further embodiment of the control system, the control system further comprises an external computing device comprising functionality for determining shuttle trajectories.

In a further embodiment of the control system, the external computing device comprises a programmable logic controller (PLC).

In a further embodiment of the control system, the track control computing device further comprises a real-time communication interface for communicating with the external computing device.

In a further embodiment of the control system, the real-time communication interface comprises a fieldbus interface.

In a further embodiment of the control system, the 3^{rd} party trajectory control receives the shuttle trajectories from the external computing device.

In a further embodiment of the control system, the communication interface is a field programmable gate array (FPGA) card.

In a further embodiment of the control system, the PLC further comprises functionality for determining tooling trajectories of tooling arranged along the track.

In a further embodiment of the control system, wherein one or more of the different motion control methods includes trajectory planning functionality that comprises: determining an error of the shuttle's position; determining a compensation for correcting the determined error; and combining the error compensation and the shuttle trajectory to provide a compensated trajectory for the shuttle.

In a further embodiment of the control system, the track control computing device further comprises a network communication interface for communicating with external devices.

In a further embodiment of the control system, the instructions executed by the processor further configure the track control computing device to provide configuration functionality for configuring the track in the track control computing device.

In a further embodiment of the control system, the configuration functionality comprises a track application programming interface (API).

In a further embodiment of the control system, the configuration functionality further comprises access control functionality for controlling user access to functionality provided by the API.

In a further embodiment of the control system, the control system further comprises a user interface device comprising front end functionality for providing a user interface to access the API.

In a further embodiment of the control system, the user interface device further provides a user interface to access PLC.

In accordance with the present disclosure there is further provided a non-transitory computer readable memory storing instructions, which when executed by a processor configures a track control computing device to provide a plurality of different motion control methods for controlling movement of the plurality of shuttles, the motion control methods comprising: internal trajectory control configured to: determine shuttle trajectories; determine control data based on the determined shuttle trajectories; and transmit the control data to the track over the communication interface; and 3^{rd} party trajectory control configured to: receive shuttle trajectories; determine control data based on the received shuttle trajectories; and transmit the control data to the track over the communication interface.

A control system for a linear motor conveyor system can be provided on generic computing components. The hardware agnostic controller can interface with an external 3^{rd} party programable logic controller (PLC) that can provide planning functionality for controlling the motion of shuttles on the track. The PLC may provide proprietary functionality for controlling the shuttles and possibly other components. While the PLC may provide proprietary functionality that may be desirable for certain applications or scenarios, it may not be ideal or desirable in all scenarios or applications. The hardware agnostic controller can provide various control methods for controlling the motion of shuttles, including controlling the shuttles based on trajectories determined by the 3^{rd} party PLC. In addition to providing control of shuttles moving on the conveyor track according to the PLC, the hardware agnostic controller can also determine the shuttle trajectories internally.

The hardware agnostic controller provides flexibility in how shuttles are controlled. Further, the ability to control the conveyor system according to shuttle trajectories determined by external 3^{rd} party, as well as by the controller itself can provide greater flexibility in the integration, configuration and operation of the linear motor conveyor in different applications. The hardware agnostic controller may also provide a programming interface to external devices in order to provide a convenient interface for configuring the linear motor conveyor as well as possibly monitoring the operation of the conveyor.

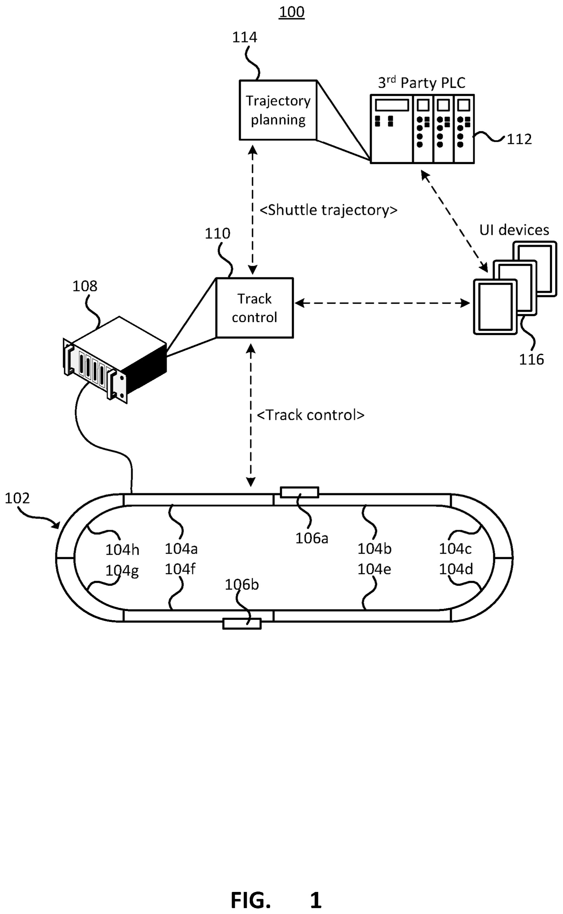

FIG. 1 depicts a control system for a linear motor conveyor. The system 100 includes a linear motor conveyor 102 comprising a plurality of connected track sections 104a..104h (referred to collectively as track sections 104). FIG. 1 depicts the track sections as being arranged in a loop; however, the track sections can be arranged in a wide variety of configurations, including closed loop configurations and open-ended configurations. A number of shuttles 106a, 106b (referred to collectively as shuttles 106) can controllably move along the track sections. Each track section includes a number of electromagnetic coils that can be controlled to generate a magnetic field, which interacts with a magnet or magnetic array on the shuttles in order to provide motive force to move the shuttles. By controlling the current supplied to the different coils, the shuttles can be moved along the conveyor track independently.

A controller 108 is provided that controls the movement of the shuttles 106 along the track sections 104. The conveyor controller can be provided as a general purpose computing device that is configured by the execution of particular instructions to provide track control functionality 110. The controller 108 may directly control the coils in each track section, or the coils may be controlled by one or more additional controllers. For example, the controller 108 may determine the trajectories of the shuttles, then determine the coil current setpoints necessary to provide the trajectories and then control the coils, or coil drive electronics to provide the determined current to the coils. Alternatively, the controller 108 may communicate the trajectories to one or more intermediary controllers, such as a controller arranged in each track section, which in turn determine and apply the coil currents to provide the received trajectories.

In addition to the controller 108 that provides the track control functionality 110, the control system further includes a 3^{rd} party programmable logic controller (PLC) 112 that can provide trajectory planning functionality 114. Although depicted as being provided by a 3^{rd} party PLC, the trajectory planning functionality 114 may be provided on the same computing hardware as the controller 108. The trajectory planning functionality 114 provided by the PLC allows a consumer to use an existing PLC that they may be particularly familiar with or may have other components that interact with or are controlled by the PLC. While a consumer may wish to use a particular manufacturer's PLC to provide the shuttle trajectory planning, the PLC may not be able to directly control a conveyor track that is not natively supported by the PLC manufacturer

The PLC 112 can determine the shuttle trajectories and pass those trajectories to the controller 108. The controller 108 can then determine the track control data in order to provide the received trajectories. The controller may determine the control information required by the particular conveyor track. As described above, the control information may comprise information for directly controlling coil driving circuitry, or may comprise information used by one or more additional controllers in order to control the coils.

In addition to the track controller 108 and the PLC 110, the control system may further include one or more user interface devices 116 that may communicate with the controller and/or the PLC in order to provide a user interface for controlling or interacting with either device. The UI devices 116 are depicted as tablets, however, a wide range of devices may be provided including, for example mobile devices such as phones, computers, and/or monitors. The UI devices may interact with the track control functionality 110 in order to configure the conveyor track as well as possibly display operational information such as shuttle positions, status information, faults, etc.

The control system depicted in FIG. 1, and described further below, allows the track control functionality to execute on generic computing resources such as an open industrial PC while allowing the customer to use a 3rd party PLC that can do all of the motion control for the conveyor track. The track control functionality may also represent the conveyor track, and shuttles to the PLC as its own objects. The control system 100 provides flexibility in how the shuttles on a conveyor track are controlled, and allows the motion control to be done using 3rd party PLCs, regardless of the manufacturer of the PLC and the conveyor system. The control system described herein provides a hardware agnostic control system for a linear motor conveyor.

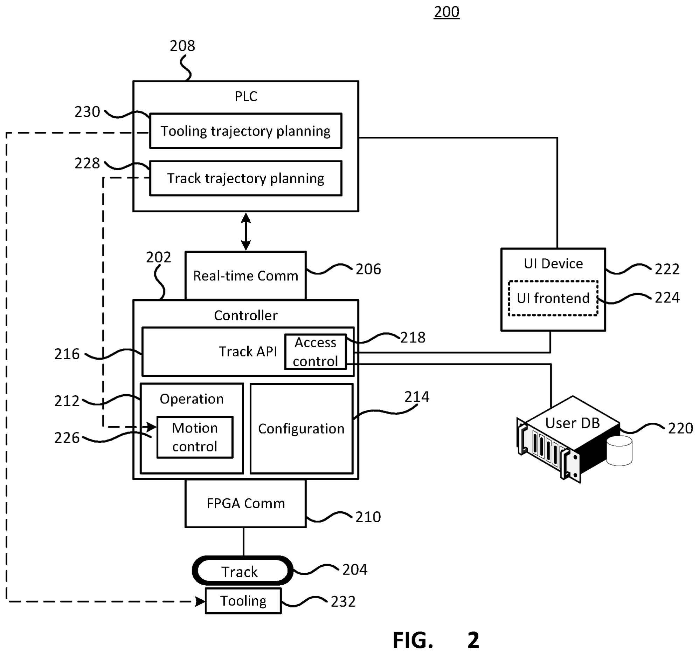

FIG. 2 depicts details of a control system for a linear motor conveyor. The system 200 similar to that of FIG. 1. A controller 202 controls the motion of shuttles (not shown) on the conveyor track 204. The controller can be provided by generic computing hardware such as an open standard industrial PC. The controller 202 includes a real-time communication interface 206. The real-time communication interface can provide different fieldbus communication protocols, including for example, EtherCAT^{®}, Ethernet/IP, ProfiNET^{®} or other real-time communication protocols. The real-time communication interface provides real-time communication between the controller 202 and the PLC 208.

In addition to the real-time communication interface 206 communicating with the PLC, the controller 206 also includes a communication interface, depicted as a field programmable gate array (FPGA) card 210 that communicates with the track. Although depicted as an FPGA card other types of communication between the controller and the conveyor track may be used. For example, if the conveyor track includes respective controllers in the track sections, communication with the track section controllers may be provided using different fieldbus protocols such as EtherCAT Ethernet/IP, ProfiNET^{®} or other real-time communication protocols.

The controller 202 provides various functionality, including functionality for the operation 212 of the conveyor track as well as functionality for the configuration 214 of the conveyor track. The configuration functionality 214 may allow the configuration of the track in the controller. The configuration may specify, among other details, how the track is arranged, including the number of track sections and their orientations, number of shuttles, etc. Further, regions of the track may be defined along with their respective parameters such as maximum acceleration, velocity and/or jerk values etc.

The controller may further include a track application programming interface (API) that provides external access to the operation functionality 212 and the configuration functionality 214. The API provides a plurality of calls that expose the functionality of the controller. The APIs may include access control functionality 218 that ensures only authorized users are able to access particular API calls. The access control may access a user database 220 that provides user identities and access information such as their roles, groups, or authorization levels that can be used to determine whether they are authorized to make a particular API call.

The track API allows various UI devices 222 to access the configuration functionality and/or the operation functionality. The UI devices include UI frontend functionality 224 that provides a user interface to the controller using the API 216. The frontend functionality 224 can provide the user interface in various ways including, for example as a web-based interface. The UI devices 222 can include a wide range of physical devices such as mobile phones, tablets, computers, laptops, etc. The UI devices 222, using the track API 216, can provide a convenient user interface for configuring a conveyor track as well as monitoring its operation. For example a user interface may be provided that displays the real-time, or near real-time, location of shuttles on the track.

The communication between the controller 202 and the UI device 222 does not need to be real-time. As such, the communication may be provided using standard network communications such as TCP or UDP communication protocols over wired or wireless communications. As depicted in FIG. 2, the UI device 222 may also communicate with the PLC controller.

The controller 202 includes operation functionality 212 that controls the conveyor track, and in particular, the movement of the shuttles on the track, during operation. The operation functionality includes motion control functionality 226 that controls the motion of the shuttles. The motion control functionality may work with track trajectory planning functionality 238 of the PLC. The PLC may perform the trajectory planning of the shuttles on the track and pass the determined trajectories to the motion control functionality of the controller 202 using the real-time communication interface 206. The motion control functionality receives the trajectories and determines the track control data in order to control the shuttles on the track according to the received trajectories. In addition to controlling the track according to shuttle trajectories received from the 3rd party PLC, the motion control functionality may also determine the shuttle trajectories and control the track according to the determined shuttle trajectories. Regardless of how the shuttle trajectories are determined, the track control data is communicated from the controller 202 to the track 204 using the FPGA communication card 210.

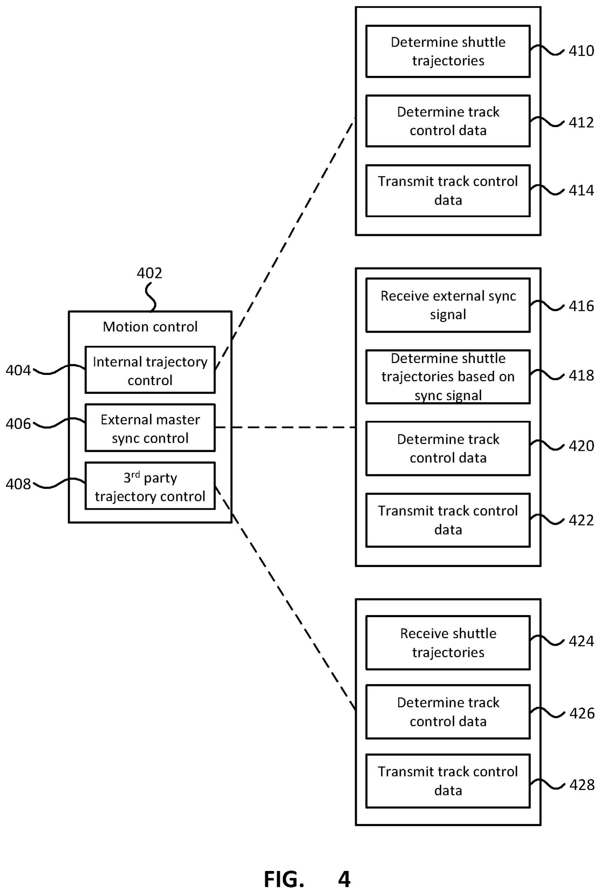

The PLC 208 includes track trajectory planning functionality 228 that defines the shuttle trajectories travelling on the track. The shuttle trajectories can be specified in various ways. For example, the shuttle's trajectory may simply be expressed as a specific target location on the track that the shuttle should be located at a particular time. Additionally, or alternatively, the shuttle trajectory can specify other details such as locations, velocities, accelerations and / or jerk of the shuttles at various instances of time. The PLC may also include additional trajectory planning functionality, such as tooling trajectory planning functionality 230 that can provide trajectories for other tooling 232. The tooling trajectories may control the operation of various tooling along the track that performs various operations. For example, the tooling trajectories may control the movement of an arm and gripper that picks components from a loading location and places them onto shuttles as they arrive. The PLC may coordinate the movement of shuttles and other tooling components. As described further below with reference to FIG. 4, the controller 202 may determine the shuttle trajectories which can be synchronized with the movement of other tooling by way of one or more synchronization signals.

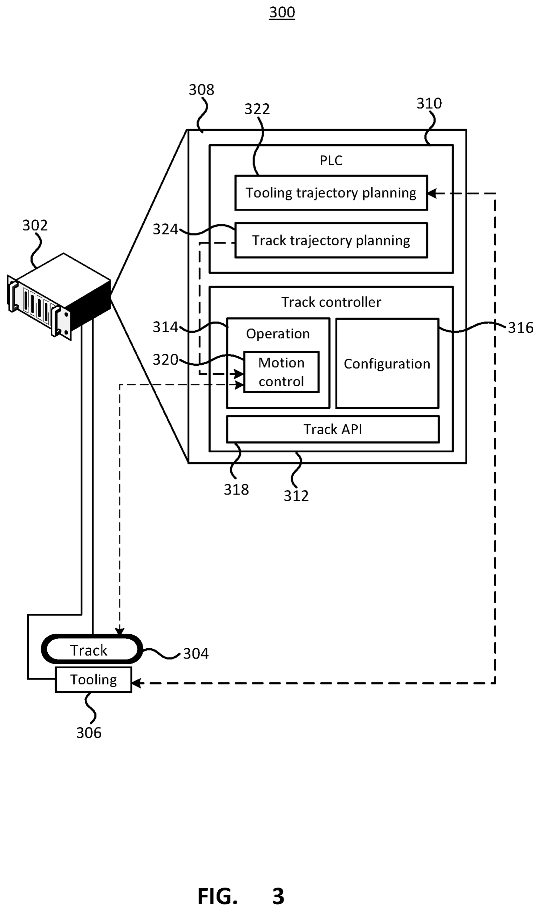

FIG. 3 depicts details of a further control system for a linear motor conveyor. The system 300 is similar to the system 200 described above. The controller 302 may be provided by general purpose computing devices that are preferably running a real-time operating system such as real-time Linux^{®}. The controller includes one or more communication interfaces for communicating with the various components being controlled. For example, the controller 302 may include a communication interface for connecting to and communicating with the track 304 as well as a communication interface for connecting to and communicating with tooling 306 or other components. The controller 302 provides various functionality 308 including PLC functionality 310 and track controller functionality 312.

The track controller functionality 312 is similar to the controller functionality 202 described above and may include operation functionality 314 for use in controlling the operation of the shuttles on the track and configuration functionality 316 for controlling the configuration of the track. The operation functionality and configuration functionality may be accessed by other components through a track API 318 that exposes various functions for access by the other components. The operation functionality 314 may include motion control functionality 320 that may be similar to the motion control functionality 226 described above. The motion control functionality may determine shuttle trajectories, or receive shuttle trajectories, and determine the track control data in order to control the track to provide the desired shuttle trajectories.

The controller functionality 308 may further include PLC functionality 310 that may include, for example, tooling trajectory planning functionality 322 and track trajectory planning functionality 324. The tooling and track trajectory planning functionality is similar to that described above however is provided on the same hardware as the track controller rather than as a separate PLC. The tooling trajectory planning functionality determines the trajectories of the tooling 306. The track trajectory planning functionality 324 may determine the shuttle trajectories and stream the trajectories to the motion control functionality 320 of the track controller. The motion control functionality 320 can determine the track control data in order to control the track to provide the desired trajectories to the shuttles. The motion control functionality 320 may also determine the shuttle trajectories instead of, or in addition to, receive them from the PLC functionality.

FIGs. 2 and 3 depict a control system in which the PLC functionality is separate from the track controller functionality and may be provided by a separate PLC or on the same hardware as the track controller functionality. It is possible to combine both approaches. For example the PLC functionality for a first set of tooling may be provided on the same hardware as the track controller. The PLC functionality may provide shuttle trajectories to the track controller. Separate PLC functionality for a second set of tooling may be provided on a separate PLC which can also provide shuttle trajectories to the track controller.

FIG. 4 depicts details of motion control functionality provided by a control system for a linear motor conveyor. The motion control functionality 402 depicted in FIG. 4 may be used as the motion control functionality 226 or 320 described above. As depicted, the motion control functionality 402 provides a plurality of different motion control methods 404, 406, 408 that are able to control the movement of the shuttles on a conveyor track. The different motion control methods may include: 1) an internal trajectory control method 404 that determines the shuttle trajectories itself, 2) an external master sync control method 406 that determines the shuttle trajectories itself based on an external sync signal, and 3) a 3rd party trajectory control method 408 that receives the shuttle trajectories from an external source such as an external PLC. While each motion control method may be used in a wide range of applications, the internal trajectory control may provide an easy to configure point-to-point motion control method where the exact motion performed by the shuttle between the two points does not matter. The external sync control may be used to provide a static or pre-defined motion profile for the shuttle that needs to be synchronized to some external component. The 3^{rd} party trajectory control may be more complex to code and configure and it allows an external controller or system to have full control of the shuttle trajectory, which could be useful, for example, to synchronize the shuttle motion to an external component that may not follow the same motion profile every cycle.

The internal trajectory control functionality 404 can control the shuttle movements without additional input from other components. The internal trajectory control can control the shuttles in a synchronous manner or in an asynchronous manner. The internal trajectory control may output various signals such as trigger signals when a shuttle reaches a target location, or synchronization signals, that allow the motion of external components such as tooling around the track to be coordinated with the movement of the shuttles.

The internal trajectory control functionality 404 determines the shuttle trajectories (410). Once the shuttle trajectory is determined, the shuttle trajectory is used to determine track control data (412) that will provide the desired trajectory. The track control data may be specified in various ways such as specifying the current setpoints of coils, or may specify locations, velocities, and/or accelerations of the shuttle at particular times and/or durations, and used to determine the current setpoints of the coils. Once the track control data is determined, it is transmitted to the conveyor track (414). Depending upon how the trajectories are determined, the track sections may communicate feedback information such as shuttle locations on the track that can be used to precisely control the shuttles. Determining the track control data may take into account various parameters and conditions of the track that may impact the trajectories. For example, gaps between the track sections may expand or contract based on the track temperature. Similarly, the length of the track sections may change based on the track temperature.

The external master sync control functionality 406 is similar to the internal trajectory control in that it determines the shuttle trajectories. However, the external master sync control determines the shuttle trajectories based on an external sync signal. The external sync signal is received (416). The sync signal may be provided from an external component such as the PLC. The shuttle trajectories are then determined based on the sync signal (420). The sync signal may identify a particular location within a cycle. For example, the sync signal may specify an angle between 0° and 360°. The sync signal may replicate a physical rotating cam that was historically used to synchronize motion of multiple components. The sync signal can be used to determine the shuttle locations in various ways, including for example using a sync table that relates a position specified by the sync signal to a shuttle location, velocity, acceleration and/or jerk. Once the trajectories are determined the track control data is determined (420).

The 3rd party trajectory control 408 is similar to the internal trajectory control 404; however, instead of determining the shuttle trajectories at the controller, the shuttle trajectories are received from an external PLC (424). The received shuttle trajectories may then be used to determine the track control data (426) and transmit it to the conveyor track (428).

In the above, various functionality, such as determining and transmitting track control data is repeated. It will be appreciated that the same functionality can be used by the various different control methods without duplicating the functionality.

When the motion control functionality receives external signals, whether as a sync signal or shuttle trajectories, there may be additional considerations to address in determining the shuttle trajectories. For example, external devices may experience a clock drift relative to the clock of the controller. The controller may perform a clock sync compensation to correct for the possible clock drift so that small errors in the clock sync signals do not accumulate. Additionally the motion control functionality may compensate received trajectory setpoints based on the specifics of the track. Furthermore, the controller and external device may not operate on the same clock cycle which may need to be compensated for. Further still, one or more scans of trajectory setpoints streamed from the external device may be missed and need to be compensated for.

The clock sync process gradually synchronizes the two clocks. The process may sample the clocks over a number, X, of scans and the clock drift or difference between the clocks of the two devices is determined. The drift can be compensated over the next X scans, which assumes that the drift over the next X is the same as the measured drift over the previous X scans. There may be a difference between the assumed drift and the actual drift. The new drift difference is measured again and is assumed to be the drift for next X scans. The clock is then compensated for the new assumed drift + the difference in the assumed vs. actual drift from previous X scans. This process is repeated by compensating the new assumed drift + difference in assumed vs. actual drift to prevent any accumulating error while gradually compensating for small drift to not ruin synchronization between the controller and the real-time communication interface which has its own time sync and may only be able to handle small amounts of clock adjustment change every scan.

It is possible that the received setpoints will need to be extrapolated. Setpoint extrapolation can be performed in order to allow the controller and external device to operate at different clock cycles. The clock cycles of the controller and external device should generally be a multiple of each other, however the external device may be X times larger. For example, it is possible that the track controller operates at a double the rate of the device providing the setpoints and as such the received setpoints are extrapolated in order to provide the additional setpoints. Further, it is possible that one or more of the setpoints may not be received, or received in time and so need to be extrapolated from the current setpoints. Although described as using extrapolation, it may be possible in certain applications to use interpolation of the received setpoints. For position only control, where the setpoints specify a position and time for the shuttle, it is possible to buffer and delay following setpoints thereby using interpolation between the points instead of extrapolation. For position only control mode, it is also possible to ensure that any extrapolation that is performed does not violate velocity, acceleration, and jerk limits, therefore it may be necessary to extrapolate setpoints to check if they'll reach or exceed the limits. If there's any mismatch or exceeding of the limits, it may be necessary to clamp the setpoints to the limits and later compensate for any mismatch if the situation arises. For example, if the shuttle is accelerating to max speed, it is possible to extrapolate the current acceleration trajectory to start decelerating if based on the current extrapolated abort trajectory it will exceed the max velocity. Then a jerk value can be assumed, which is then validated with the next setpoint input which is delayed. It is assumed that the PLC will not exceed its limits in the trajectories it generates.

It is possible that one or more trajectory setpoints from the 3rd party controller may be missed. When setpoints are missed, the received setpoints can be extrapolated to cover the missed setpoints. When new setpoints are received, the extrapolated position and velocity may not match the new values. The position and velocity may be compensated over a number of scans. Both a velocity compensation and a position compensation can be calculated between the extrapolated values compared to the received values. The determined compensation may then be overlayed on the current setpoint, or possibly over a number of scans of setpoints.

Setpoints for trajectory received from an external source are received as nominal setpoints on the track. That is, the received setpoints may be specified as a particular position on a track section. In reality the track sections may expand or contract slightly, or may not be nominally positioned resulting in small offsets between sections. The external controller may not be aware of the thermal expansion and/or inter-section gaps and as such the received setpoints may not account for the actual physical track conditions. If not compensated for, the mismatch between the expected track locations and physical track locations can accumulate to a fairly large error /position difference on large tracks if not accounted for. This can be further complicated due to the extrapolation that is required for the trajectory inputs from the external device.

In order to compensate received setpoints to the physical track, a position compensation curve can be calculated based on the track section offset. The compensation can be adjusted gradually by subtracting the compensation distance from the current received setpoint and adding a gradually executing overlayed position compensation. This way it is possible to still follow and calculate the incoming trajectory as normal, with the standard processing, while subtracting the full track offset compensation distance and then gradually adding it back or completing the compensation as time passes. If for some reason the incoming trajectory decides to reverse direction and crosses back to the original section, the implementation can handle this without special casing by now applying a new distance that will cancel out the previously applied distance, while both completing the old position compensation curve and the new position compensation curve gradually. The addition of the two will result in 'undoing' what was already done in the previous compensation curve. This is possible because the processing keeps track of the distance crossed by the section compensation separately. As such, the received setpoints from a 3rd party source, and the corresponding extrapolated trajectories are fully decoupled from any compensation trajectories. The compensation trajectory, or compensation trajectories if there are multiple compensations, can be tracked separately from the setpoints and corresponding extrapolated trajectories. Tracking compensation trajectories separately allows the compensation to be applied to new trajectories if the setpoints are changed.

For example, if a shuttle is commanded by the set points to a new position that crosses over two sections, it may be necessary to account for the additional gap between the tracks when controlling the shuttle position. For example, the gap may be 0.5mm which can be compensated for over a number of cycles. If the desired shuttle setpoint is changed while the gap compensation is being applied, it is necessary to determine how much of the gap has already been compensated for and then the remaining amount can be accounted for with the new shuttle setpoint. By tracking the error compensations being applied separately, it is possible to determine the amount of compensation already applied and so continue to apply the required compensation to the new setpoints.

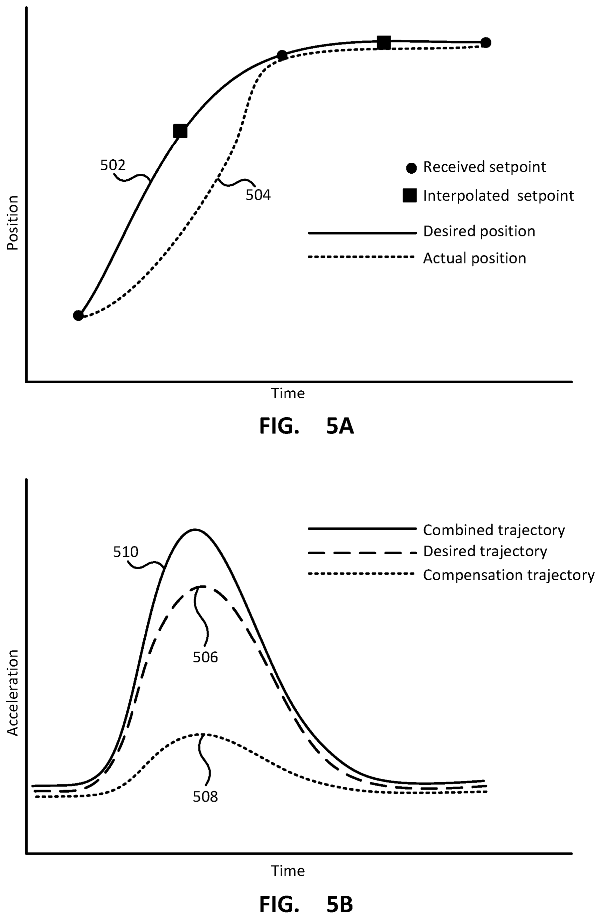

FIG. 5A depicts a graph of a desired positioning of a shuttle and an actual position of the shuttle. As depicted, the desired positioning of the shuttle can be specified in a number of received setpoints. The controller may extrapolate, or interpolate, the received set points if the setpoints are not received at the track controller's operating rate. It is possible that the desired, or commanded, positioning of the setpoints may not match the actual positioning of the shuttle. For example, as a shuttle accelerates, the desired positions may not exactly match the actual positioning of the shuttle as measured by positioning sensors on the track. The difference between the actual position and the desired position can be compensated for so that the actual position closely tracks the desired position. It is noted that while the setpoints are described as specifying a location and time for the shuttle, it is possible to specify additional, or alternative elements such as the shuttle's velocity, acceleration and/or jerk. Regardless of how the setpoints are specified, the shuttle's trajectory can be determined based on the setpoints. The shuttle's final trajectory can compensate for any discrepancy between the desired and actual positions, velocities, accelerations and/or jerk.

FIG. 5B depicts a shuttle's desired acceleration trajectory, a compensation trajectory and the combined trajectory. The combined trajectory can be calculated directly based on the desired location, or other kinematic values, for the setpoint, and the difference between the desired and actual position or kinematic values. Alternatively, as depicted in FIG. 5B, the combined trajectory can be generated from multiple independent components. For example, a shuttle trajectory 506 that achieves the shuttle's desired trajectory based on the received setpoints can be determined. Additionally, a compensation trajectory 508 can be determined that will compensate for the difference between the desired and actual positions. This error compensation can be applied over a number of control cycles in order to provide a smooth compensation.

In addition to compensating a shuttle's trajectory to correct for errors between the shuttle's desired position and actual position on the track, there may be other errors to compensate for. For example, the track sections may expand/contract based on temperature. Further, different track sections may be connected together and there may be a small gap between the two track sections. The device providing the setpoints for the shuttle may not have information about the thermal expansion or gaps between track sections and as such a commanded position or setpoint may not reflect the actual setpoint position that is calculated, either extrapolated or interpolated. Accordingly, if a shuttle is commanded to travel, for example 25cm over two connected sections, if the additional gap is not accounted for and compensated for, the shuttle's position may be off by 0.5mm at the end of the commanded travel. The gap error can be compensated for over a number of cycles in order to move the shuttle the additional distance of the gap.

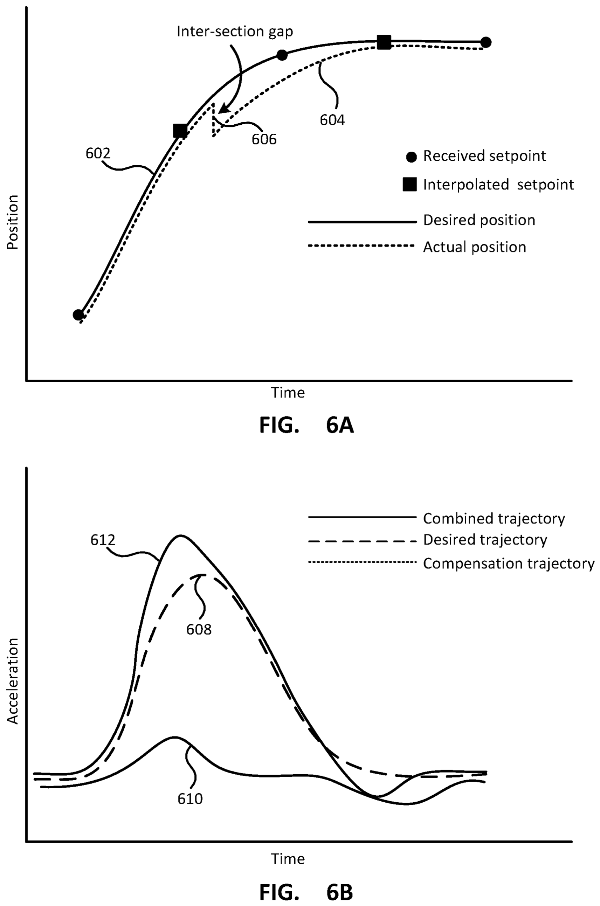

FIG. 6A depicts a graph of a desired position 602 and actual position 602 of a shuttle as it moves across a gap between two sections. As depicted, the desired position may command a shuttle to move a particular distance, or to a particular position, that requires the shuttle to cross from one track section to another. As depicted, as the shuttle crosses the inter-section gap, the shuttle's actual position may be offset 606 from the desired position by the section gap. Accordingly, if the shuttle is commanded to travel a set distance and crosses over the gap, there may be discrepancies between the commanded setpoints and the calculated setpoints. This discrepancy or gap error can be compensated for, for example by moving the shuttle the additional distance of the 0.5mm gap so that the commanded set points and calculated setpoints will align again. As depicted in FIG. 6B, the gap error can be compensated for by combining the desired trajectory 608 with a compensation trajectory 610 that moves the shuttle the additional distance of the gap. The gap error compensation trajectory can be combined with the desired trajectory to provide the combined compensation trajectory 612.

The above has described different error compensations. It is possible to directly calculate the total compensated trajectory that combines all of the different error compensations. However, doing so effectively treats all errors equally and may attempt to compensate for all of the errors over the same time period. However, it may be desirable to treat the errors differently. For example, the positioning errors between the commanded and actual positions may be compensated for over a relatively short period of time, while the gap-error compensation can be applied over a longer period of time. Further, if the overall compensation is calculated directly, it can be difficult to account for further compensation if the desired trajectory changes. For example, when the desired trajectory changes, the previous position error compensation is no longer relevant; however, assuming that the gap-error compensation was not yet fully applied, the remaining gap-error compensation still needs to be applied. If the total compensation trajectory is calculated directly, it can be difficult to an amount of the gap-error compensation that has been applied and so how much still needs to be applied to the new desired setpoint. By treating each error in the shuttle positioning separately, the individual compensations can be easily recalculated if the shuttle trajectory is adjusted.

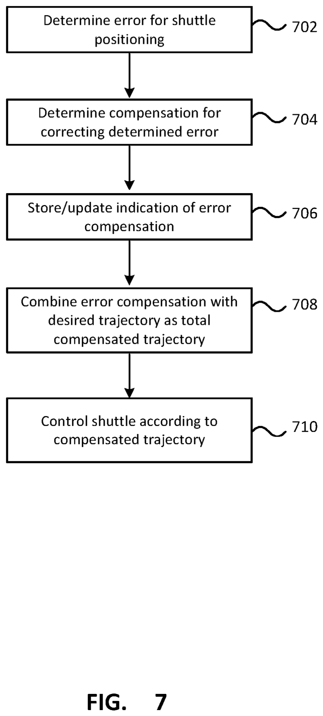

FIG. 7 depicts a method for calculating a shuttle's trajectory. The method 700 determines an error in the shuttle's positioning (702). Although a single error is depicted, it is possible for there to be multiple sources of errors in the shuttle's positioning. With the error determined, for example, the actual shuttle position is off by 0.1mm from the commanded shuttle position, the compensation required for correcting the error is determined (702) which may be determined as a compensation trajectory that compensates for the error over one or more control cycles. The error compensation, or an indication of the error compensation can be stored and/or updated (706). The indication of the error compensation can include various information such as one or more of the compensation trajectory, a total kinematic value such as position, velocity, acceleration, jerk, that is being compensated for, a desired number of cycles for the compensation, an amount of compensation performed already and/or other additional information. It will be appreciated that the indication of the error compensation can be updated throughout the shuttle control process. The error compensation trajectory can be combined with the desired trajectory (708). When combining the trajectories, any relevant kinematic limits, such a maximum velocities, accelerations, jerk, for the current track section should be adhered to. For example, if the shuttle is already travelling at the maximum velocity, it may not be possible to apply a compensation trajectory that requires the shuttle to accelerate to a higher velocity. The application of such error compensations can be delayed until it is possible to apply them without violating any kinematic limits. Once the combined total compensated trajectory is determined, it can be used to control the shuttle(708).

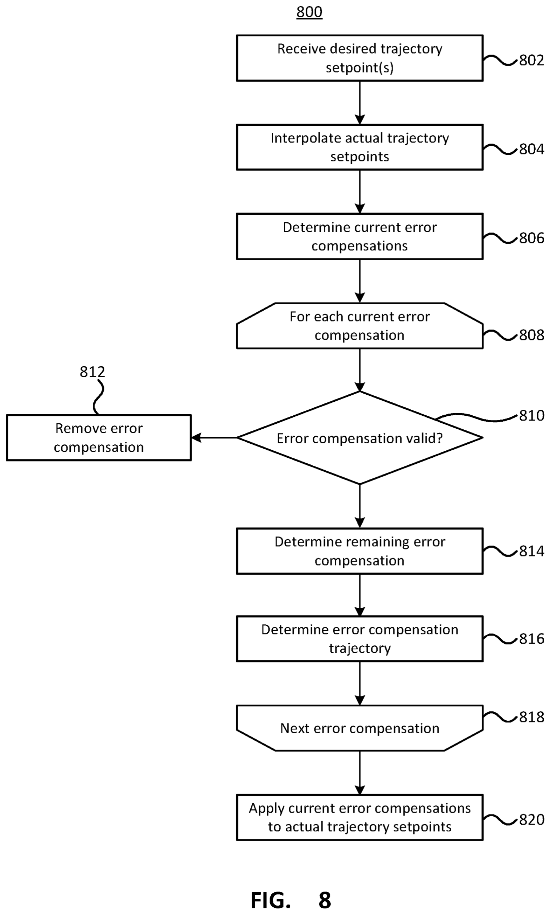

FIG. 8 depicts a method of compensating a shuttle's trajectory for one or more errors. The method 800 receives desired trajectory set point(s) (802). The set points may be extrapolated, or interpolated, to actual trajectory set points (804). The method may determine the current error compensations that are associated with the shuttle (806). For each of the error compensations (806) the method may determine if the error compensation is still valid (810). The error compensation may be no longer valid for various reasons, including for example receiving a new desired set point. It is noted that certain conditions occurring such as receiving new setpoints may invalidate some error compensations while others remain valid. As discussed above, the gap-error compensation may remain valid even if a new setpoint is received. If the error compensation is no longer valid (No at 810) is can be removed from further consideration (812). If it is valid (Yes at 810) the remaining error compensation required to still be applied can be determined (814) and the corresponding error compensation trajectory can be determined (818). All of the error compensations are processed (818) in the same manner. Once all of the error compensations are processed, the resulting error compensation trajectories can be combined with the actual trajectory setpoint trajectory (820) to provide the total compensated trajectory which can be used to control motion of the shuttle.

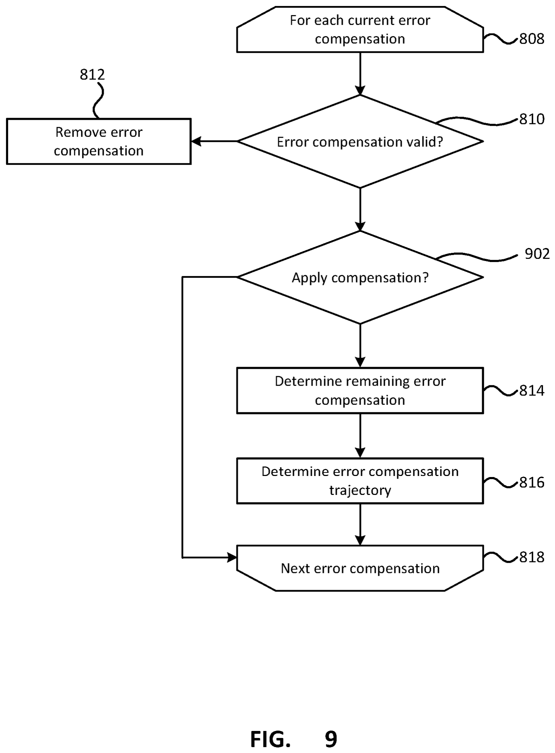

FIG. 9 depicts an additional or alternative method for processing each of the error compensations (808 - 818) described above. After determining that the error compensation is valid (Yes at 810), the method may also determine if the error compensation should be applied (902). In some scenarios it may be desirable to delay applying a compensation. For example, while it is generally desirable to account for the inter-section gap, it may be desirable to delay the compensation in the case where the shuttle needs to be travelling at a constant velocity. In such a scenario, it may be technically possible to apply the compensation, for example without exceeding track limits, however it is undesirable to do so as the shuttle's priority is moving at a constant velocity. In such a case the application of the compensation can be delayed until after the constant velocity move is completed. Accordingly, if it is determined that the error compensation should be applied (Yes at 902) it is applied as described above (814, 816). If the error compensation should not be applied (No at 902), the next error compensation (818) is processed.

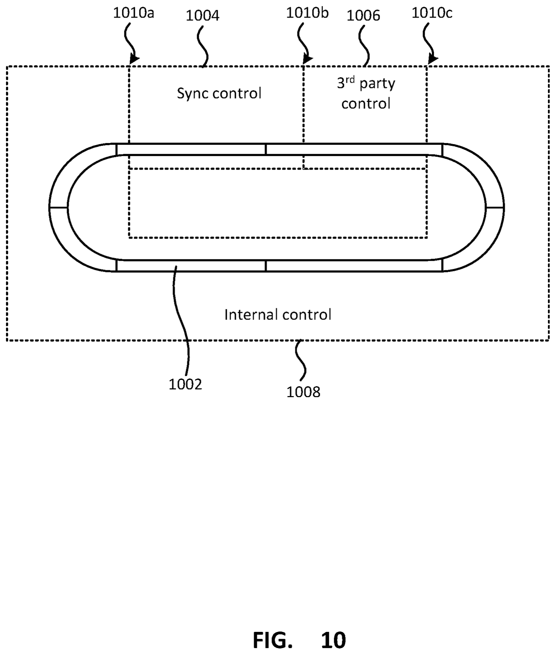

FIG. 10 depicts a multi-region track controlled by different motion control methods. In the above it was assumed that the conveyor track controls all of the shuttles on the track using the same method. However, the controller can define multiple different regions along the conveyor track and can use different motion control methods to control the motion over different regions. As depicted in FIG. 10, a conveyor track is arranged into 3 different sections or regions, 1004, 1006, 1008. Shuttles on the first region 1004 may be controlled using, for example, the external master sync control method, while shuttles on the second region may be controlled using, for example, the 3rd party control method. Finally, as depicted, the third region 1008 may be controlled using, for example, the internal control method. It will be appreciated that the number of regions, the control method used for each region, and the order of the regions can vary from that depicted in FIG. 10.

While different regions can be controlled using different control mechanisms, as a shuttle moves from one control method to another, the shuttle movement must transition smoothly. For example at a first transition point 1010a between the internal control and sync control, the sync control method will define certain shuttle kinematics, such as the shuttle velocity and/or acceleration, based on the sync signal at the time the shuttle arrives at the transition location. The motion of the shuttle must match the kinematics at the transition point. As the shuttle transitions from one control region to the other, the control methods need to be coordinated to ensure that the kinematics of the shuttle at the transition points between control methods 1010a, 1010b, 1010c, match both control methods.

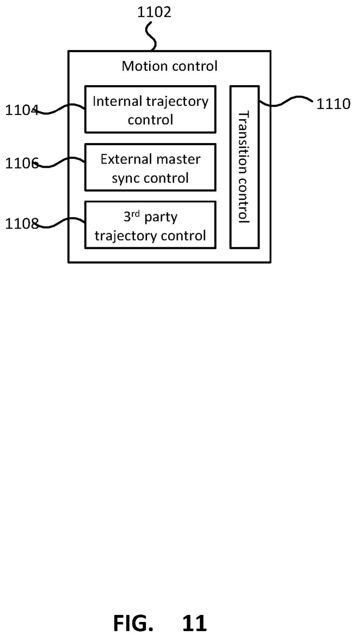

FIG. 11 depicts further details of motion control functionality provided by a control system for a linear motor conveyor. In order to ensure the shuttle kinematics as a shuttle moves between different control regions match, the motion control functionality 1102, which includes the different motion control methods 1104, 1106, 1108, further includes transition control functionality 1110 that ensures the two control methods at transition points match the shuttle kinematics. The different control methods may have varying degrees of freedom in the shuttle control. For example, the sync control method 1108 may specify the shuttle trajectories/kinematics relative to an external sync signal and as such, the kinematics of the shuttle at the region transition points can not be adjusted. In contrast, the internal trajectory control 1104 may use asynchronous motion control for the shuttles and as such can adapt the shuttle control to any of particular shuttle kinematics at the transition location. As long as there is flexibility in the shuttle trajectories determined by at least one of the shuttle control methods, the transition control can adjust the trajectories so that the shuttle kinematics from each control method match at the transition point. If however, there was no flexibility between the trajectories, it may not be possible to transition between the two regions, in which case the track may require reconfiguration of the conveyor track. For example, it would not be possible to arrange two sync control sections next to each other if region one requires the shuttle to be moving at 1m/s at the transition point and the other region requires the shuttle to be moving a 2m/s at the transition point. Generally however, the conveyor tracks and control regions are arranged in a manner that the transition control can match shuttle kinematics at the transition points.

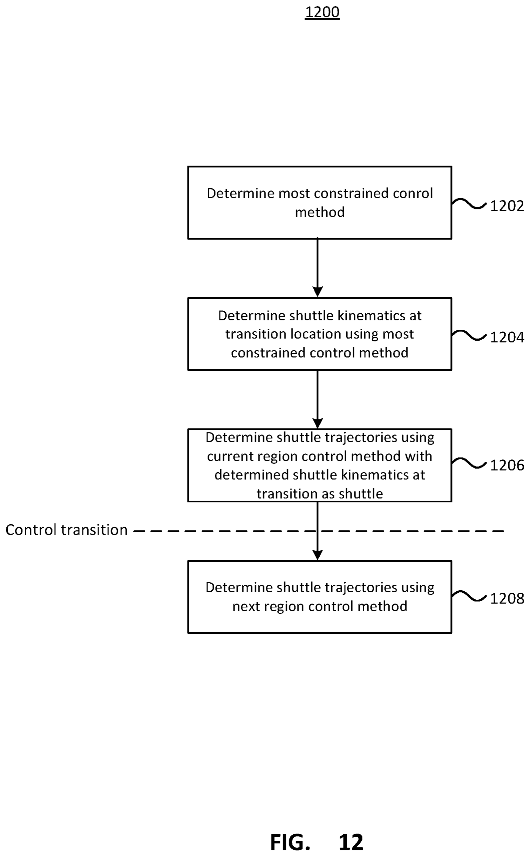

FIG. 12 depicts a method of providing multi-region motion control. The method 1200 begins with determining which control method is the most constrained at the transition location (1202). The most constrained control method at the transition location is the control method that has the least flexibility in the shuttle trajectory at the transition location. The constraints on the shuttle trajectories may be pre-defined for each shuttle control method, or may be determined during operation. For example, the transition control functionality described above may request the control method to specify the maximum and minimum kinematic values it use at the transition location. Regardless of how the more constrained control method is determined, it is used to determine the future shuttle kinematics at the transition location (1204). The determined shuttle kinematics at the transition location may then be used by the current region's control method to determine the shuttle trajectory (1206). The determined kinematics at the transition location can be used as a target by the control method, or the control method can determine the kinematics and compare them to the determined transition kinematics and adjust the shuttle trajectory until the kinematics match. As the shuttle transitions to the next control region, the next control method can be used to determine the shuttle trajectories (1208). If the next control method is the more constrained, the shuttle will be moving with the required kinematics at the transition location. Alternatively, if the initial region is the more constrained, the next region will be able to determine the shuttle trajectory from the shuttle's kinematics at the transition.

It will be appreciated by one of ordinary skill in the art that the system and components shown in FIGs. 1 - 12 may include components and/or steps not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as defined in the claims.

Although certain components and steps have been described, it is contemplated that individually described components, as well as steps, may be combined together into fewer components or steps or the steps may be performed sequentially, non-sequentially or concurrently. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the components and processes described herein may be provided by various combinations of software, firmware and/or hardware, other than the specific implementations described herein as illustrative examples.

The techniques of various embodiments may be implemented using software, hardware and/or a combination of software and hardware. Various embodiments are directed to apparatus, e.g. a node which may be used in a communications system or data storage system. Various embodiments are also directed to non-transitory machine, e.g., computer, readable medium, e.g., ROM, RAM, CDs, hard discs, etc., which include machine readable instructions for controlling a machine, e.g., processor to implement one, more or all of the steps of the described method or methods.

Some embodiments are directed to a computer program product comprising a computer-readable medium comprising code for causing a computer, or multiple computers, to implement various functions, steps, acts and/or operations, e.g. one or more or all of the steps described above. Depending on the embodiment, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the method(s) described herein. The processor may be for use in, e.g., a communications device or other device described in the present application.

Numerous additional variations on the methods and apparatus of the various embodiments described above will be apparent to those skilled in the art in view of the above description. Such variations are to be considered within the scope of the current disclosure.

## Claims

1. A control system for a linear motor conveyor comprising a track over which a plurality of shuttles are controllably moved, the control system comprising:
a track control computing device comprising:
a communication interface in communication with the track; and
a processor executing instructions that configure the track control computing device to provide a plurality of different motion control methods for controlling movement of the plurality of shuttles, the motion control methods comprising:
internal trajectory control configured to:
determine shuttle trajectories;
determine control data based on the determined shuttle trajectories; and
transmit the control data to the track over the communication interface; and
3^{rd} party trajectory control configured to:
receive shuttle trajectories;
determine control data based on the received shuttle trajectories; and
transmit the control data to the track over the communication interface.

2. The control system of claim 1, wherein the motion control methods further comprise:
external master sync control configured to:
receive an external master sync signal;
determine sync shuttle trajectories based on the external sync signal;
determine control data based on the sync shuttle trajectories; and
transmit the control data to the track over the communication interface.

3. The control system of claim 2, wherein determining the sync shuttle trajectories uses a sync table associating shuttle positions with sync signals.

4. The control system of any one of claims 1 to 3, wherein the track control computing device can control different sections of the track using different motion control methods.

5. The control system of claim 4, wherein the instructions executed by the processor further configure the track control computing device to provide transition control functionality for transitioning motion control from a first motion control method to a second motion control method.

6. The control system of claim 5, wherein the transition control functionality controls a shuttle trajectory to match shuttle kinematics determined by the second motion control method at a transition location.

7. The control system of any one of claims 1 to 6, further comprising an external computing device comprising functionality for determining shuttle trajectories.

8. The control system of claim 7, wherein the external computing device comprises a programmable logic controller (PLC).

9. The control system of claim 7 or 8, wherein the track control computing device further comprises a real-time communication interface for communicating with the external computing device.

10. The control system of claim 9, wherein the real-time communication interface comprises a fieldbus interface.

11. The control system of any one of claims 7 to 10, wherein the 3^{rd} party trajectory control receives the shuttle trajectories from the external computing device.

12. The control system of any one of claims 8 to 11, wherein the PLC further comprises functionality for determining tooling trajectories of tooling arranged along the track.

13. The control system of any one of claims 1 to 12, wherein one or more of the different motion control methods includes trajectory planning functionality that comprises:
determining an error of the shuttle's position;
determining a compensation for correcting the determined error; and
combining the error compensation and the shuttle trajectory to provide a compensated trajectory for the shuttle.

14. The control system of any one of claims 1 to 13, wherein the track control computing device further comprises a network communication interface for communicating with external devices, wherein the instructions executed by the processor further configure the track control computing device to provide configuration functionality for configuring the track in the track control computing device, wherein the configuration functionality comprises a track application programming interface (API).

15. A non-transitory computer readable memory storing instructions, which when executed by a processor configures a track control computing device to provide a plurality of different motion control methods for controlling movement of the plurality of shuttles, the motion control methods comprising:
internal trajectory control configured to:
determine shuttle trajectories;
determine control data based on the determined shuttle trajectories; and
transmit the control data to the track over the communication interface; and
3^{rd} party trajectory control configured to:
receive shuttle trajectories;
determine control data based on the received shuttle trajectories; and
transmit the control data to the track over the communication interface.
